# EUROPEAN PATENT SPECIFICATION

(11) **EP 3 053 453 B1**
(45) Date of publication and mention of the grant of the patent: **20.06.2018**
(21) Application number: 15152689.4
(22) Date of filing: 27.01.2015
(51) Int. Cl.: A23D 7/005, A23D 7/01, A21D 2/16, A21D 8/02, A23D 7/02

(54) **Fat-continuous bakery emulsion**
Fettkontinuierliche Backemulsion
Émulsion de boulangerie à base de graisse

(43) Date of publication of application: 10.08.2016
(73) Proprietor: CSM Bakery Solutions Europe Holding B.V., 1019 GM Amsterdam (NL)
(72) Inventor: Demeurisse, Jeroen, 9870 Zulte (BE); Stronati, Raffaele, 20020 Lainate Milan (IT)
(74) Representative: Nederlandsch Octrooibureau

(56) References cited:
- WO-A2-2014/092531
- GB-A- 810 525
- US-A- 3 697 294
- US-A- 5 178 897
- US-A1- 2008 175 958
- US-A1- 2012 263 853

## Description

### TECHNICAL FIELD OF THE INVENTION

The present invention relates to bakery emulsions comprising 60-88 wt.% of a continuous fat phase and 12-40 wt.% of a dispersed aqueous phase, and having a high content of monoglycerides of saturated fatty acids. The bakery emulsion according to the present invention can advantageously be used in the preparation of bakery products such as cake, cookies and yeast leavened dough. The bakery emulsions of the present invention, when intimately mixed with flour and other bakery ingredients to produce a dough or a batter, yield baked products with, for instance, improved fresh keeping properties. The bakery emulsion may also advantageously be used in the preparation of aerated bakery fillings and toppings.

Other aspects of the present invention relate to the use of the bakery emulsion in a method of preparing a dough or a batter, or in a method of preparing aerated fillings or toppings.

### BACKGROUND OF THE INVENTION

Staling of baked foodstuffs is a well-known problem. Staling, or "going stale", is a chemical and physical process in baked foods that reduces their palatability. Staling becomes evident as an increase of the firmness of the crumb, a decrease of the elasticity or resilience of the crumb, and changes in the crust, which becomes tough and leathery. The increase in crumb firmness, which is considered as the most important aspect of staling, is recognized by the consumer a long time before the bread product has otherwise become unsuitable for consumption.

Staling is not, as is commonly believed, simply a drying-out process due to evaporation of water. Bread will stale even in a moist environment and stales most rapidly at temperatures just above freezing. Although the precise mechanism of staling is still unknown, one important mechanism appears to be migration of moisture from the starch granules into the interstitial spaces, and realigning of amylose and amylopectin molecules of starch. The process of the realignment of the starch molecules is called retrogradation. On retrogradation, crystal-like structures may form that are similar to those originally present in the starch granules, and the process is referred to as recrystalisation. Retrogradation normally results in stale bread with a harder, less resilient crumb texture.

Starch is an essential constituent of baked foodstuffs. During the baking process, the starch becomes gelatinized and absorbs large amounts of water; meanwhile the protein denatures. Immediately after baking, the starch begins to retrograde. The firmness of the crumb increases, although this is still regarded as an advantage in the first hours. In particular the sliceability and chewing characteristics of the crumb improve during this period.

It is assumed that the unbranched starch fraction, amylose, retrogrades first, followed by the branched fraction of the starch, amylopectin, during further storage. At the same time the crumb becomes stiffer, and in the course of time increasingly less elastic and eventually dry and hard: the bread has become stale. In addition, the crust looses crispness and becomes leathery during storage. It is assumed that this is a result of water being released by retrogradation and diffusing outward from the crumb to the crust.

It is undisputed that the causal key reaction for all of these staling phenomena is starch retrogradation. Suppressing or circumventing this phenomenon is the subject matter of numerous protective rights and publications.

One strategy for hindering, at least partly, the considerable firming of the crumb during storage has already been long known: the crumb is made softer from the beginning. The means of choice to do this are emulsifiers such as mono/diglycerides, which are added to the dough and produce a crumb structure that is particularly soft from the beginning.

The use of α-amylase derived from fungi such as *Aspergillus oryzae* has a similar effect. It acts upon damaged starch particles, thereby lowering the viscosity of the dough and producing fermentable sugars. As a consequence, the finished baked article has larger volume, which is consistent with softer crumb. Aside from the fact that the fresh bread is soft, this strategy does not prevent or inadequately prevents the development of a harder, less elastic consistency of the crumb when it becomes stale.

A further strategy is to reduce retrogradation by enzyme-mediated partial hydrolysis of the two starch fractions during baking. Enzyme-mediated hydrolysis of the crumb should preferably take place after the starch has been gelatinized, i.e., above about 65°C. As a consequence the structure of the starch in the baked product is radically altered, limiting its ability to retrograde. Heat-stable maltogenic amylases are widely used in the baking industry as an anti-staling agent due to their ability to reduce retrogradation by hydrolyzing starch at starch gelatinization temperature.

Anti-staling agents such as mono/diglycerides and enzymes are usually added during dough or batter preparation as a single ingredient or as part of bakery mix (e.g. a cake mix or a bread improver).

The use of high levels of monoglycerides in water-in-oil emulsions, notably in puff pastry (lamination or roll-in) margarines and table spreads, has been described in the prior art.

EP-A 1 205 113, for instance, describes an edible fat product consisting of a dispersion comprising a continuous fat phase, 10 to 90 wt.% of a dispersed phase and fatty acid monoglycerides in an amount of calculated on fat phase of 1.5-15 wt.%. The monoglycerides are used as structuring agent of the fat phase. The examples of the European patent application describe edible fat products in the form of table spreads and a pourable emulsion.

EP-A 2 153 725 describes a composition for laminated dough comprising, in percentage by weight of the composition: from 45 to 64 % by weight of a fat phase comprising a fat blend and at least one emulsifier; from 35 to 55 % by weight of an aqueous phase comprising water and at least one thickener. The emulsifier may be present in a total amount of 0.1-5 wt.%.

US 2007/0148313 describes a puff pastry margarine containing a high diglyceride emulsifier that comprises a mixture of mono-, di- and triglycerides, the diglyceride portion of the emulsifier being at least about 65% w/w.

US 2012/0263853 describes an edible product comprising a non-hydrogenated vegetable oil; a structuring composition comprising a fat system which includes a mixture of glycerides comprising at least about 50% by weight diglycerides and less than about 25% by weight monoglycerides based upon the total weight of glycerides in the composition. A roll-in margarine for use in the preparation of puff pastry is described in example 8.

WO 2008/091842 describes a hydrated fat composition containing:
(a) a continuous phase comprising a fully-hydrogenated vegetable oil, a stearine fraction of a vegetable oil, or a mixture thereof in an amount of 5 wt.% to 40 wt.% of the hydrated fat composition; and a low trans fat liquid vegetable oil in an amount of 20 wt.% to 80 wt.% of the hydrated fat composition;
(b) a dispersed phase comprising water in an amount of 5 wt.% to 50 wt% of the hydrated fat composition; and
(c) an emulsifier. WO 2008/091842 mentions a concentration range of 1-10 wt.% for the emulsifier component.
The examples of WO 2008/091842 describe hydrated fat compositions in the form of laminating fats.

US 5,178,897 describes water-in-oil emulsion compositions for bakery applications. The patent examples disclose W/O emulsions containing 43% fat (30% hardened fish oil and 13% palm oil), 53% water, 1.5 wt.% saturated monoglyceride in combination with 1.2 wt,% trans-unsaturated monoglyceride (Examples 1, 2, 3) and a W/O emulsion containing 2.7 wt.% saturated monoglyceride (Comparative Example 1).

US 3,697,294 describes a process for producing a fat product containing a water phase as a dispersed phase such as a bakery margarine. The process described therein comprises the steps of preparing at a temperature within the range from 55-68 °C a dispersion constituting 5-45 wt.% of mainly 1-monoglyceryl esters of saturated fatty acids, containing 14- 22 carbon atoms, in 95-55 wt.% water, and of emulsifying said dispersion into an edible fat component for forming a fat emulsion of 40 90% fat and 60-10% dispersion in which said dispersion forms the dispersed phase and said fat component forms the continuous phase.

GB810525A describes the preparation of bakery products by incorporating into a baking mix, prior to baking, a monoglyceride composition in an amount comprising 0.1-3.0 wt.% of the baking mix and being comprised of 50-95 wt.% of higher triglyceride having fat-forming fatty acid radicals and 5-50 wt.% of purified and concentrated monostearin or monopalmatin or mixture thereof, the monoglyceride composition being a fatty material having substantially uniformly dispersed therein more than 25 wt.% of the monopalmatin or monostearin or mixtures thereof in needle-like microcrystalline form.

### SUMMARY OF THE INVENTION

The inventors have developed a bakery emulsion that can advantageously be used in the preparation of baked products with improved fresh keeping, 'shortening' and aerating properties. Examples of baked products that can suitably be prepared by intimately mixing the bakery emulsion of the present invention with flour and other bakery ingredients include cake, cookies (short pastry) and yeast leavened dough (e.g. brioche).

The bakery emulsion of the present invention comprises: 60-88 wt.% of a continuous fat phase, including 1.5-10% by weight of the emulsion of monoglyceride of saturated fatty acids selected from glyceryl monostearate, glyceryl monopalmitate, glyceryl monomyristate, glyceryl monolaurate, glyceryl monobehenate and combinations thereof; and 12-40 wt.% of a dispersed aqueous phase, wherein monoglycerides of saturated fatty acids represent at least 80 wt.% of the monoglycerides contained in the emulsion; and wherein the aqueous phase of the bakery emulsion contains less than 2% monoglycerides by weight of said aqueous phase. The continuous fat phase has a solid fat content at 20°C (N₂₀) of 12-40%, a solid fat content at 25°C (N₂₅) of 8-30%, a solid fat content at 35°C (N₃₅) of less than 15%, a solid fat content at 40°C (N₄₀) of not more than 10%, and a ratio (N₂₀-N₃₅)/N₂₀ of at least 0.5, said solid fat contents being determined by NMR measurements (AOCS official method Cd 16b-93).

The bakery emulsion of the present invention is ideally suited for use in the preparation of dough or batter. The emulsion can easily be mixed with flour and other ingredients to produce a homogeneous dough or batter. During such mixing, the bakery emulsion is evenly distributed throughout the dough or batter. Although the inventors do not wish to be bound by theory, it is believed that the even distribution of the emulsion through the dough or batter enables the monoglyceride component of the emulsion to form an amylose-monoglyceride complex with a substantial fraction of the amylose present in the flour, thereby protecting said amylose against retrogradation (of especially high importance in yeast leavened doughs). In comparison to baked product prepared with a conventional bakery emulsion, baked products prepared with the present bakery emulsion tend to have a softer crumb, a higher specific volume and improved resistance to staling.

The bakery emulsion of the present invention can also suitably be used in the preparation of aerated fillings and toppings. The bakery emulsion of the present invention has excellent whipping properties that facilitate the preparation of, for instance, aerated fillings and toppings. The improved aerating properties are also beneficial in the production of cakes e.g. made by the so-called sugar-batter method. The improved aerating properties yield cake batters with a higher specific volume (lower density), eventually leading to baked cakes with a higher specific volume and lower crumb hardness.

The bakery emulsion of the present invention can also suitably be used in the preparation of short pastry such as, for instance, biscuits, cookies, spritz. The application of the present bakery emulsion in these short pastry products yields baked products with more crispiness.

Another aspect of the invention relates to a method of preparing a dough or batter that comprises thoroughly mixing flour and other bakery ingredients with the bakery emulsion of the present invention.

The invention further provides a method of preparing an aerated filling or topping, comprising mixing sugar with the present bakery emulsion and further bakery ingredients, followed by aerating the resulting mixture.

### DETAILED DESCRIPTION OF THE INVENTION

Accordingly, one aspect of the invention relates to a bakery emulsion comprising 60-88 wt.% of a continuous fat phase and 12-40 wt.% of a dispersed aqueous phase, said continuous fat phase having a solid fat content at 20°C (N₂₀) of 12-40%, a solid fat content at 25°C (N₂₅) of 8-30%, a solid fat content at 35°C (N₃₅) of less than 15%, a solid fat content at 40°C (N₄₀) of not more than 10%, and a ratio (N₂₀-N₃₅)/N₂₀ of at least 0.5, said solid fat contents being determined by NMR measurements (AOCS official method Cd 16b-93); wherein the emulsion contains 1.5-10 wt.% of monoglycerides of saturated fatty acids selected from glyceryl monostearate, glyceryl monopalmitate, glyceryl monomyristate, glyceryl monolaurate, glyceryl monobehenate and combinations thereof; and wherein monoglycerides of saturated fatty acids represent at least 80 wt.% of the monoglycerides contained in the emulsion; and wherein the aqueous phase of the bakery emulsion contains less than 2% monoglycerides by weight of said aqueous phase. The terms "wt.%" and "% by weight" refer to the concentration expressed on a weight-by-weight basis (% (w/w)).

The term "fat" or "oil" as used herein, unless indicated otherwise, refers to lipids selected from triglycerides, diglycerides, monoglycerides, fatty acids, phosphoglycerides and combinations thereof. Unless indicated otherwise, the fat and oil present in the bakery emulsion - including the monoglycerides of saturated fatty acids - is deemed to be part of the continuous fat phase.

The solid fat content profile of the fat phase is determined by measuring the N-value at different temperatures. The N value at temperature x °C is referred to in here as Nₓ and represents the amount of solid fat at a temperature of x °C. These N-values can suitably be measured using the generally accepted analytical method that is based on NMR measurements (AOCS official method Cd 16b-93): Sample pre-treatment involves heating to 80°C 15 minutes, 15 minutes at 60°C, 60 minutes at 0°C and 30 minutes at the measuring temperature.

The monoglyceride of saturated fatty acids typically preferably is contained in the bakery emulsion in a concentration of at least 2 wt.%, more preferably of 2.5-8 wt.%, even more preferably 2.8-6.0 wt.% and most preferably of 3.0-5.0 wt.%.

The bakery emulsion of the present invention typically has a solid fat content at 20°C that is significantly higher than that of a table spread and considerably lower than that of a conventional puff pastry margarine. Accordingly, N₂₀ of the bakery emulsion preferably is in the range of 15-35%, more preferably in the range of 17-30%.

Unlike the lamination fats described in WO 2008/091842, the bakery emulsion of the present invention contains a continuous fat phase that exhibits a considerable drop in solid fat within the temperature range of 20-30 °C. Thus, in accordance with a preferred embodiment, N₂₀-N₃₀ is in the range of 6-25%, more preferably in the range of 9-20%.

Likewise, N₂₀-N₄₀ preferably is within the range of 10-35%, more preferably of 12-30%.

The ratio (N₂₀-N₃₅)/N₂₀ is indicative of the rate at which the continuous fat phase melts within the temperature range of 20 to 35°C. Preferably, the continuous fat phase of the emulsion shows considerably melting within this temperature range. Accordingly, in accordance with a preferred embodiment (N₂₀-N₃₅)/N₂₀ is at least 0.55, even more preferably (N₂₀-N₃₅)/N₂₀ is at least 0.6 and more preferably (N₂₀-N₃₅)/N₂₀ is at least 0.7.

Similarly, the ratio (N₂₀-N₄₀)/N₂₀ preferably is at least 0.7, more preferably at least 0.75.

Triglycerides typically represent the bulk of the continuous fat phase. Typically, triglycerides represent at least 80 wt.%, more preferably at least 90 wt.% of the continuous fat phase.

The bakery emulsion of the present invention typically is sufficiently hard to be packaged in a wrapper. The so called Stevens value is a suitable measure of the hardness of the present emulsion. The Stevens value at 20°C (S₂₀) is determined according to the following protocol. The temperature of the sample is maintained at 20°C for at least 24 hours before measuring the hardness of the sample at 20°C with a TA.XTplus Texture Analyser from Stable Microsystems equipped with a stainless steel probe with a diameter of 4.4 mm The probe is pushed into the product at a speed of 2 mm/s over a distance of 10 mm, using a trigger force of 5 gram. The maximum force required is expressed in grams.

The bakery emulsion of the present invention typically has a S₂₀ of at least 100 g, more preferably of 100-250 g and most preferably of 150-200g.

The bakery emulsion of the present invention may contain other monoglycerides besides the monoglycerides of saturated fatty acids. Examples of such other monoglycerides include monoglycerides of unsaturated fatty acids, such as glyceryl monooleate, glyceryl monolinoleate and glyceryl monolinoleneate. Preferably, the monoglycerides of saturated fatty acids represent at least 90 wt.% of the monoglycerides contained in the present emulsion.

The monoglyceride of saturated fatty acids employed in accordance with the present invention are preferably selected from glyceryl monostearate, glyceryl monopalmitate, and combinations thereof. Most preferably, the monoglyceride of saturated fatty acids is glyceryl monopalmitate.

The monoglyceride of saturated fatty acids typically represents 2.5-15% by weight of the continuous fat phase. More preferably the monoglyceride of saturated fatty acids represents 2.8-12%, most preferably 3-10% by weight of the continuous fat phase.

In accordance with another preferred embodiment, the bakery emulsion contains not more than 15%, more preferably not more than 12%, even more preferably not more than 8% and most preferably not more than 6% diglycerides by weight of the continuous fat phase.

Triglycerides typically represent at least 75%, more preferably at least 80%, even more preferably at least 85% and most preferably at least 90% by weight of the continuous fat phase.

The diglyceride content of the bakery emulsion preferably is less than 650%, more preferably less than 500% and more preferably less than 300% by weight of the monoglyceride of saturated fatty acids.

The bakery emulsion of the present invention advantageously contains 0.1-1 wt.%, more preferably 0.12-5 wt.% and most preferably 0.15-3 wt.% of phosphoglycerides.

Although monoglycerides are virtually insoluble in water they are capable of swelling in the presence of water to form different liquid crystalline phases. 1-monoglyceride/water systems can form up to three classes of liquid crystalline phases, namely lamellar, reversed hexagonal and cubic. The monoglyceride of saturated fatty acids that is present in the bakery emulsion of the present invention is preferably not contained in the aqueous phase in the form of a liquid crystalline (mesomorphic) phase.

The aqueous phase of the bakery emulsion contains less than 2%, more preferably less than 1% and most preferably less than 0.5% monoglycerides by weight of said aqueous phase.

As will be explained below, the bakery emulsion of the present invention is suitably prepared by a process in which the monoglyceride is combined with the fat phase components in molten form, followed by combining of the molten fat phase with the aqueous phase and further processing of the combined phases into a bakery emulsion. In the bakery emulsion so obtained the monoglyceride is largely present in the fat phase and at the oil-water interface.

The bakery emulsion typically contains 70-85 wt.% of a continuous fat phase and 15-30 wt.% of a dispersed aqueous phase.

Together, fat and water typically represent at least 70 wt.%, more preferably at least 80 wt.% and most preferably at least 90 wt.% of the present emulsion.

The aqueous phase of the bakery emulsion may suitably contain edible ingredients such as salt, hydrocolloids, non-hydrocolloid protein, dispersed fat, flavouring, acidulant and preservatives. An example of a non-hydrocolloid protein is milk protein.

The fat phase of the bakery emulsion typically is composed of a blend of fats and oils. Examples of fats and oils that may be employed include highly unsaturated liquid oils (e.g. sunflower oil, soybean oil and/or rapeseed oil), lauric fats (e.g. coconut oil and/or palm kernel oil), palm oil and milk fat. Also olein and/or stearin fractions of these oils and fats may suitably be used. Likewise, the aforementioned oils or blends of these oils and fats may be employed in hydrogenated and/or interesterified form.

The fat phase of the emulsion may also contain other edible ingredients besides fat. Examples of such edible ingredients include colouring, flavouring and anti-oxidants.

Another aspect of the present invention relates to a process of manufacturing a bakery emulsion as described herein, said process comprising:
- combining one or more fat components and the monoglycerides of saturated fatty acids in the preparation of a molten mixture having a temperature of at least 65°C, more preferably of at least 68°C and most preferably of at least 70°C, and optionally adding further fat phase components to said molten mixture to prepare a fat phase composition;
- mixing an aqueous phase composition and the fat phase composition to prepare a pre-emulsion, said pre-emulsion having a temperature in the range of 40-85 °C; and
- cooling the pre-emulsion.

The present process encompasses an embodiment wherein the molten mixture is prepared by combining monoglycerides of saturated fatty acids with only a part of the fat components of the fat phase composition, followed by the addition of the remainder of the fat components.

The one or more fat components preferably include one or more vegetables oils that may have been modified by e.g. fractionation, interesterification and/or hydrogenation.

In the present process the molten mixture is heated to a temperature that is sufficiently high to completely melt the monoglycerides of saturated fatty acids. Thus homogeneous dispersion of the monoglycerides throughout the fat phase may be achieved.

The fat phase composition typically has a temperature of at least 60°C, more preferably of at least 65°C and most preferably of at least 67°C when it is mixed with the aqueous phase composition.

The pre-emulsion may suitably be cooled by passing the pre-emulsion through a heat exchanger. According to a preferred embodiment, the pre-emulsion is subjected to mechanical working during the cooling so as to ensure that an emulsion with plastic (as opposed to brittle) consistency is obtained. Scraped surface heat exchangers are an example of a type of heat exchanger that can be used to cool the pre-emulsion. Typically, the pre-emulsion is cooled in the heat exchanger to a temperature of less than 20°C, more preferably of less than 15°C.

Another aspect of the invention relates to a method of preparing a dough or batter comprising thoroughly mixing flour with a bakery emulsion as defined herein before, typically at room temperature (20°C). As explained herein before the bakery emulsion of the present invention can easily be mixed with flour and other ingredients to produce a homogeneous dough or batter. By evenly distributing the bakery emulsion throughout the dough or batter the monoglyceride of saturated fatty acids component are allowed to form a complex with amylose present in the flour. Amylose that has thus been complexed is less susceptible to retrogradation than non-complexed amylose. Thus, the thorough mixing of the bakery emulsion with flour in the present process is essential for improving the staling behaviour of the cooked dough or batter.

The dough or batter obtained by the present method is suitably divided in portions that are cooked to prepare ready-to-eat products. Cooking methods that may be employed to prepare such ready-to-eat products include baking, frying and boiling. Most preferably, the portions of dough or batter are cooked by baking. Typically, during cooking, the core temperature of the portions of dough of batter is increased to at least 70°C, more preferably at least 90°C.

The bakery emulsion is typically employed in the present method in a concentration of 5-110% by weight of flour, more preferably in a concentration of 10-100 % by weight of flour.

In accordance with one advantageous embodiment of the invention, the method is used to prepare a yeast-leavened dough, said method comprising thoroughly mixing flour with the bakery emulsion, active yeast, water and optionally further bakery ingredients,. Examples of yeast-leavened dough that can suitably be produced in this fashion include bun dough and brioche dough.

Typically, the yeast-leavened dough is prepared by employing the bakery emulsion in a concentration of 5-60% by weight of flour, more preferably of 10-50% by weight of flour.

The water content of the yeast-leavened dough typically lies in the range of 40-60% by weight of flour. More preferably, the water content is within the range of 45-55% by weight of flour.

In another preferred embodiment, the method is used to prepare batter, said method comprising thoroughly mixing flour with the bakery emulsion, sugar, eggs and further bakery ingredients. Examples of batter that may suitably be prepared by this method include cake batter and muffin batter

The batter is typically prepared by employing the bakery emulsion in a concentration of 10-100.% by weight of flour, more preferably of 30-100% by weight of flour. Sugar is typically employed in the batter in a concentration of 50-150% by weight of flour. Egg solids are preferably employed in a concentration of 25-100% by weight of flour.

The water content of the batter preferably lies in the range of 20-100% by weight of flour, more preferably in the range of 25-80% by weight of flour.

A further aspect of the invention relates to a method of preparing an aerated filling or topping, said method comprising mixing sugar with the bakery emulsion of the present invention and further bakery ingredients, followed by aerating the resulting mixture. As explained herein before, the bakery emulsion of the present invention has excellent whipping properties. Thus, the bakery emulsion may advantageously be used in the preparation of aerated fillings or toppings such as buttercream (Italian, French, Swiss, German type), cream icings and cream cheese icings.

In the preparation of an aerated filling or topping, the bakery emulsion is preferably employed in a concentration of 20-125% by weight of sugar, more preferably of 50-100% by weight of sugar.

Total sugar content of the aerated filling or topping typically lies in the range of 20-60 wt.%, more preferably in the range of 30-50 wt.%.

The aerated filling or topping obtained by the present method preferably has a specific volume of at least 1.3 ml/g, more preferably a specific volume of 1.5-3 ml/g.

The invention is further illustrated by the following non-limiting examples.

### EXAMPLES

### Example 1

Two bakery emulsions (Emulsion 1 and Comparative Emulsion A) were prepared as follows:
- The fat blend according to Table 1 was molten by heating to 65°C in a premix vessel.
- The total amount of emulsifier was combined with part of the fat blend and dissolved therein by heating the blend to a temperature above the melting point of the emulsifier (min. 66°C). After melting the dissolved emulsifier was added to the fat blend.
- The aqueous phase was prepared by adding salt and lactic acid to water at a temperature of 40°C. The pH of the aqueous phase was 3.7.
- The aqueous phase was added to the fat phase under vigorous stirring to obtain a fat continuous emulsion.
- The emulsion was heated in a plate heat exchanger (85°C / 45 seconds) before being fed to a series of scraped surface heat exchangers (A-units) and a B-unit.
- The crystallised bakery emulsion so produced was packaged in a wrapper.

**Table 1**

| | **Emulsion 1** | **Comparative Emulsion A** |
|---|---|---|
| **Fat phase** | | |
| *Fat blend (40% milk fat* / *60% vegetable fats)* | *76.00%* | *79.80%* |
| *Myverol 18-04K¹* | *4.00%* | *0.20%* |
| | | |

| **Aqueous phase** | | |
|---|---|---|
| *Water* | *19.88%* | *19.88%* |
| *Salt* | 0.10% | 0.10% |
| *Lactic acid (80%)* | 0.02% | 0.02% |
| | | |
| **Total** | **100%** | **100%** |

| | | |
|---|---|---|
| ¹ Myverol 18-04K, Kerry Ingredients, distilled monoglycerides, min. 95% monoglycerides, Iodine Value max. 3, source: palm | | |

The N-line characteristics of the fat phases of the two emulsions and the Stevens hardness of the emulsions at 20 °C are shown in Table 2.

**Table 2**

| | **Emulsion 1** | **Comparative Emulsion A** |
|---|---|---|
| N₁₀ | 52.2% | 53.8% |
| N₁₅ | 34.8% | 35.5% |
| N₂₀ | 21.0% | 21.0% |
| N₂₅ | 13.7% | 14.3% |
| N₃₀ | 8.7% | 9.4% |
| N₃₅ | 5.1% | 5.4% |
| N₄₀ | 2.4% | 1.0% |
| | | |
| (N₂₀-N₃₅)/N₂₀ | 0.76 | 0.74 |
| N₂₀-N₃₀ | 12.3% | 11.6% |
| N₂₀-N₄₀ | 18.6% | 20.0% |
| (N₂₀-N₄₀)/N₂₀ | 0.89 | 0.95 |
| S₂₀ | 154 g | 153 g |

### Example 2

Yeast dough (brioche) was prepared on the basis of the recipe shown in Table 3, using bakery emulsion 1 and comparative bakery emulsion A of Example 1, after they had been stored for 2 weeks at 15-20 °C.

**Table 3**

| **Ingredient** | **Weight (g)** | **Temperature (°C)** |
|---|---|---|
| Flour | 1,000 | 20 |
| Sugar | 100 | 20 |
| Salt | 20 | 20 |
| Eggs | 400 | 5 |
| Water | 150 | 0 |
| Yeast | 50 | 5 |
| Bakery emulsion | 500 | 20 |

The brioche dough was prepared, proofed and baked as follows:
- Mix flour, salt, sugar, yeast, eggs and water over a period of 3 minutes at speed 1 in a Hobart mixer (10L + hook).
- Knead for 8 minutes at speed 2 (scrape down after 4 minutes).
- Place the dough on the table and fold the bakery emulsion in the dough.
- Knead 10 minutes speed 2 (scrape down 2 times).
- Let the dough rest for 30 minutes at 20°C covered in plastic.
- Knock-back the dough.
- Put the entire dough on a press plate and let a bun dividing machine (Super Easy Automat ER) divide the dough and set round in pieces of 70-75 g. The machine will press 2,3 seconds to even out the dough, than cut the dough in 30 pieces with a height of 8 mm. The machine will round the pieces for 5 seconds.
- Let them proof for 90 minutes at 28°C (75% humidity).
- Use mixed egg to cover the surface of the brioches.
- Bake for 8 minutes at 250°C in a deck oven.
- After 2 hours at room temperature the brioches are packed in a plastic bag.

The properties of the baked brioches obtained using Emulsion 1 and Comparative Emulsion A are described in Table 4.

**Table 4**

| | **Emulsion 1** | **Comparative Emulsion A** |
|---|---|---|
| Specific Volume | 3.94 ml/g | 3.46 ml/g |
| Mouthfeel score¹ after 1 day | 4 | 3 |
| Crumb hardness² after 1 day | 979 g | 2,322 g |
| Crumb hardness after 6 days | 1,601 g | 3,138 g |

| | | |
|---|---|---|
| ¹ Mouthfeel score: score between 1 (bad) and 5 (very good) ² Crumb hardness: crumb sample to be analysed is prepared by cutting pieces (50x50x25mm) from the crumb. To measure the crumb hardness, a Texture Profile Analysis (TPA) is performed using a TA.XT₂ from Stable Micro Systems. Following settings were programmed: • Load cell: 5kg • Probe: 50mm ø Cylinder Aluminium Probe - P/50 • TA.XT₂-settings ▪ Pretest speed: 1mm/s ▪ Test speed: 5mm/s ▪ Posttest speed: 5mm/s ▪ Compression depth: 10mm (40% compression on 25mm sample) ▪ Time between cycles: 5s ▪ Trigger type: automatic on 5g ▪ Data acquisition rate: 200pps | | |

The crumb hardness is the first positive peak in the graph, meaning the maximum force expressed in grams needed to compress the sample during the first cycle.

### Example 3

Pound cake was prepared_was prepared on the basis of the recipe shown in Table 5, using bakery emulsion 1 and comparative bakery emulsion A of Example 1, after they had been stored for 2 weeks at 15-20 °C.

**Table 5**

| **Ingredient** | **Weight (g)** | **Temperature (°C)** |
|---|---|---|
| Flour | 560 | 20 |
| Sugar | 560 | 20 |
| Eggs | 560 | 20 |
| Bakery emulsion | 560 | 20 |
| Baking powder | 5 | 20 |

The pound cake was prepared as follows:
- Mix the eggs with the electrical mixer until it becomes homogeneous (max. 30 seconds).
- Pre-cream the bakery emulsion and sugar (5L Hobart + paddle):
   ∘ 1 minute at speed 1, scrape down.
   ∘ 5 minutes at speed 2, measure specific volume, scrape down.
   ∘ 5 minutes at speed 2, measure specific volume, scrape down.
- Slowly add the eggs to the pre-cream in 3 minutes, at speed 2, scrape down
- Add thoroughly mixed blend of flour and baking powder:
   ∘ 1.25 minutes at speed 1, scrape down.
   ∘ 1.25 minutes at speed 1.
- Spray cake tins lightly with a release agent.
- Weigh 300g in a cake tin.
- Baking temperature deck oven: 180°C (up), 160°C (down). Baking time: 60 minutes

The properties of the pound cakes obtained using Emulsion 1 and Comparative Emulsion A are described in Table 6.

**Table 6**

| | **Emulsion 1** | **Comparative Emulsion A** |
|---|---|---|
| Specific volume after 5 min. pre-creaming | 1.22 ml/g | 1.10 ml/g |
| Specific volume after 10 min. pre-creaming | 1.39 ml/g | 1.3 ml/g |
| Specific volume batter | 1.25 ml/g | 1.03 ml/g |
| Specific volume cake | 2.36 ml/g | 1.93 ml/g |
| Crumb hardness¹ after 1 day | 2,050 g | 3,541 g |
| Crumb hardness after 3 days | 2,594 g | 4,246 g |

| | | |
|---|---|---|
| ¹ Crumb hardness: Identical procedure in Example 2), except that cylindrical pieces (ø 50 mm, height 25 mm) were cut from the center of the cake crumb. | | |

### Example 4

Aerated filling (French buttercream) was prepared on the basis of the recipe shown in Table 7, using bakery emulsion 1 and comparative bakery emulsion A of Example 1, after they had been stored for 2 weeks at 15-20 °C.

**Table 7**

| **Ingredient** | **Weight (g)** | **Temperatur e (°C)** |
|---|---|---|
| Water | 200 | 20 |
| Crystal sugar | 450 | 20 |
| Eggs | 200 | 20 |
| Bakery emulsion | 400 | 20 |

The buttercream was prepared as follows:
- Boil water and sugar in a cooking pan until 118°C.
- Mix the eggs in a big Hobart bowl and add the hot sugar syrup.
- Whip egg-syrup mixture for 15 minutes at speed III. Measure the temperature (target value: 25°C). If needed, whip further until 25°C is reached.
- Put the bakery emulsion, in lumps of approximately 50g in to the bowl. Add 600g egg-syrup mixture.
- Beat 1 minute at speed I and 1 minute at speed II, scrape down.
- Beat the cream, in periods of 30 seconds, at speed III until a homogeneous mixture is obtained (no longer than 90 sec). Scrape down.
- Beat three times 3 minutes at speed III. Measure specific volume in between and scrape down.
- Pipe rosettes.

The properties of the butter creams obtained using Emulsion 1 and Comparative Emulsion A are described in Table 8.

**Table 8**

| | **Emulsion 1** | **Comparative Emulsion A** |
|---|---|---|
| Specific volume after 3 min. beating | 1.33 ml/g | 1.08 ml/g |
| Specific volume after 6 min. beating | 1.59 ml/g | 1.23 ml/g |
| Specific volume after 9 min. beating | 1.67 ml/g | 1.33 ml/g |

### Example 5

Two bakery emulsions (Emulsion 1 and Comparative Emulsion A) were prepared on the basis of the recipes shown in Table 9:
- The fat blend was molten by heating to 65°C in a premix vessel.
- The total amount of emulsifier was combined with part of the fat blend and dissolved therein by heating the blend to a temperature above the melting point of the emulsifier (min. 69°C). After melting the dissolved emulsifier was added to the fat blend.
- The aqueous phase was prepared by dissolving salt and lactic acid in water at a temperature of 40°C.
- The aqueous phase was added to the fat phase under vigorous stirring to obtain a fat continuous emulsion.
- The emulsion was heated in a plate heat exchanger (75°C / 45 seconds) before being fed to a series of scraped surface heat exchangers (A-units) and a B-unit.
- The crystallised bakery emulsion so produced was packaged in a wrapper.

Another bakery emulsion (Comparative emulsion 2) was prepared on the basis of the recipes shown in Table 9:
- The aqueous phase was prepared by adding Myverol 18-08 and salt according to the composition in Table 1 to water at a temperature of 60°C. By agitation Myverol 18-08 is completely dispersed and during the agitation the mixture is carefully heated to 63-64°C. The dispersion time is 1-2 hours depending on the grain size of the Myverol 18-08. Water losses due to evaporation were minimized and if needed the water content was adjusted afterwards. The lactic acid is added to the aqueous phase when the dispersion is finished and immediately before combining the fat phase with the aqueous phase.
- The aqueous phase was added to the fat phase (at about 40°C) under vigorous stirring to obtain a fat continuous emulsion.
- The emulsion was cooled by a series of scraped heat exchangers (A-units) and a B-unit.
- The crystallised bakery emulsion so produced was packaged in a wrapper.

**Table 9**

| | **Emulsion 1** | **Emulsion 2** | **Comparative Emulsion A** |
|---|---|---|---|
| **Fat phase** | | | |
| *Fat blend* | 76.27% | 76.27% | 79.47% |
| *Myverol 18-08¹* | *3.40%* | *0.00%* | *0.20%* |
| *Native sunflower lecithin* | *0.33%* | *0.33%* | *0.33%* |

| **Aqueous phase** | | | |
|---|---|---|---|
| *Water* | *19.48%* | *19.48%* | *19.48%* |
| *Myverol 18-08¹* | 0.00% | *3.40%* | 0.00% |
| *Salt* | 0.5% | 0.5% | 0.5% |
| *Lactic acid (80%)* | 0.02% | 0.02% | 0.02% |
| **Total** | **100%** | **100%** | **100%** |

| | | | |
|---|---|---|---|
| ¹ Myverol 18-08, Kerry Ingredients, distilled monoglycerides, min. 93% monoglycerides, Iodine Value max. 3, Fatty acid composition: 87.7% C18:0 | | | |

During preparation of comparative emulsion 2 excessive foam formation occurred. Since it also took a long time to disperse the monoglycerides into the aqueous phase, introduction of monoglycerides into the emulsion via the aqueous phase (Comparative emulsion 2) clearly is less practical than introduction together with the fat blend (Emulsions 1 and Comparative Emulsion A).

The water droplet size distribution of the emulsions was measured using NMR (Table 10):

**Table 10**

| | **50% with a diameter smaller than:** | **97.5% with a diameter smaller than:** |
|---|---|---|
| Emulsion 1 | 2.70 µm | 11.60 µm |
| Emulsion 2 | 2.98 µm | 13.97 µm |
| Comparative Emulsion A | 2.14 µm | 2.18 µm |

Yeast dough (brioche) was prepared on the basis of the recipe shown in Table 11, using Bakery emulsion 1, and comparative emulsions 2 and A of Example 1:

**Table 11**

| **Ingredient** | **Weight (g)** | **Temperature (°C)** |
|---|---|---|
| Flour | 2000 | 20 |
| Sugar | 200 | 20 |
| Salt | 30 | 20 |
| Water | 900 | 5 |
| Yeast | 160 | 5 |
| Bakery emulsion | 350 | 20 |

The yeast dough was prepared as follows:
- All ingredients were kneaded in a Diosna Spiral kneader for 2 minutes at speed 1 and 3.5 minutes at speed 2. The temperature of the obtained dough was 25-26°C.
- The dough was rounded and given a resting time of 15 minutes
- The dough was divided in pieces of 600 g, the dough pieces were rounded and given a resting time of 5-10 minutes
- The dough pieces were rolled out, using a lamination table, to a final thickness of 3,5 mm in 6 steps (15mm-12.8mm-10.6mm-7mm-4.5mm-3.5mm)
- The rolled-out dough was rolled manually into a bread-like shape and placed in a greased baking tin (8 cm x 9 cm x 31 cm)
- Proofing: 40 minutes at 37°C (humidity 85%)
- Baking: 45 minutes at 200°C in deck oven

The properties of the baked brioches obtained using Emulsion 1 and comparative emulsions 2 and A are described in Table 12:

**Table 12**

| | **Emulsion 1** | **Emulsion 2** | **Comparative Emulsion A** |
|---|---|---|---|
| Specific Volume | 3.85 ml/g | 3.93 ml/g | 3.84 ml/g |
| Mouthfeel score after 1 day | 5 | 5 | 4 |
| Crumb hardness after 1 day* | 807±115 | 779±113 | 1,030±120 |
| Crumb hardness after 2 days* | 947±98 | 1,072±76 | 1,188±57 |
| Crumb hardness after 3 days* | 1,178±89 | 1,082±105 | 1,438±112 |

| | | | |
|---|---|---|---|
| *: average ± standard deviation | | | |

The baking trial was repeated 4 weeks later. The results of this trial are shown in Table 13:

**Table 13**

| | **Emulsion 1** | **Emulsion 2** | **Comparative Emulsion A** |
|---|---|---|---|
| Specific Volume | 3.93 ml/g | 3.89 ml/g | 3.89 ml/g |
| Mouthfeel score after 1 day | 4.5 | 4 | 4 |
| Crumb hardness after 1 day* | 864±74 | 746±71 | 898±74 |
| Crumb hardness after 2 days* | 965±130 | 999±130 | 1,261±118 |
| Crumb hardness after 3 days* | 1,182±61 | 1,080±60 | 1,577±122 |

| | | | |
|---|---|---|---|
| *: average ± standard deviation | | | |

## Claims

1. A bakery emulsion comprising 60-88 wt.% of a continuous fat phase and 12-40 wt.% of a dispersed aqueous phase, said continuous fat phase having a solid fat content at 20°C (N₂₀) of 12-40%, a solid fat content at 25°C (N₂₅) of 8-30%, a solid fat content at 35°C (N₃₅) of less than 15%, a solid fat content at 40°C (N₄₀) of not more than 10%, and a ratio (N₂₀-N₃₅)/N₂₀ of at least 0.5, said solid fat contents being determined by NMR measurements (AOCS official method Cd 16b-93); wherein the emulsion contains 1.5-10 wt.% of monoglycerides of saturated fatty acids selected from glyceryl monostearate, glyceryl monopalmitate, glyceryl monomyristate, glyceryl monolaurate, glyceryl monobehenate and combinations thereof; and wherein monoglycerides of saturated fatty acids represent at least 80 wt.% of the monoglycerides contained in the emulsion; and wherein the aqueous phase of the bakery emulsion contains less than 2% monoglycerides by weight of said aqueous phase.

2. Bakery emulsion according to claim 1, wherein the monoglyceride of saturated fatty acids is selected from glyceryl monostearate, glyceryl monopalmitate and combinations thereof.

3. Bakery emulsion according to any one of the preceding claims, wherein the emulsion contains at least 2 wt.%, preferably 2.5-8 wt.% of the monoglyceride of saturated fatty acids.

4. Bakery emulsion according to any one of the preceding claims, wherein N₂₀ is in the range of 15-35%, preferably 17-30%.

5. Bakery emulsion according to any one of the preceding claims, wherein N₂₀-N₃₀ is in the range of 6-25%, preferably of 9-20%.

6. Bakery emulsion according to any one of the preceding claims, wherein N₂₀-N₄₀ is in the range of 10-35%, preferably of 12-30%.

7. Bakery emulsion according to any one of the preceding claims, wherein the ratio (N₂₀-N₄₀)/N₂₀ is at least 0.7, preferably at least 0.75.

8. Bakery emulsion according to any one of the preceding claims, wherein triglycerides represent at least 80 wt.%, preferably at least 90 wt.% of the continuous fat phase.

9. Bakery emulsion according to any one of the preceding claims, wherein the emulsion contains 0.1-1 wt.% of phosphoglycerides.

10. A process of manufacturing a bakery emulsion according to any one of the preceding claims, said process comprising:
• combining one or more fat components and the monoglycerides of saturated fatty acids in the preparation of a molten mixture having a temperature of at least 65°C, and optionally adding further fat phase components to said molten mixture to prepare a fat phase composition;
• mixing an aqueous phase composition and the fat phase composition to prepare a pre-emulsion,
• said pre-emulsion having a temperature in the range of 40-85 °C; and
• cooling the pre-emulsion.

11. A method of preparing a dough or a batter, said method comprising thoroughly mixing flour with a bakery emulsion according to any one of claims 1-9.

12. Method according to claim 11, wherein the flour is thoroughly mixed with the bakery emulsion, active yeast, water and optionally further bakery ingredients to prepare a yeast-containing dough, followed by leavening the yeast-containing dough.

13. Method according to claim 12, wherein the flour is thoroughly mixed with the bakery emulsion, sugar, eggs and further bakery ingredient to prepare a cake batter.

14. A method of preparing an aerated filling or topping, said method comprising mixing sugar with a bakery emulsion according to any one of claims 1-9 and further bakery ingredients, followed by aerating the resulting mixture.

## Patentansprüche

1. Backemulsion mit 60-88 Gewichtsprozent einer kontinuierlichen Fettphase und 12-40 Gewichtsprozent einer dispergierten wässrigen Phase, wobei die kontinuierliche Fettphase einen Festfettgehalt bei 20°C (N₂₀) von 12-40%, einen Festfettgehalt bei 25°C (N₂₅) von 8-30%, einen Festfettgehalt bei 35°C (N₃₅) von weniger als 15%, einen Festfettgehalt bei 40°C (N₄₀) von höchstens 10%, und ein Verhältnis (N₂₀-N₃₅)/N₂₀ von mindestens 0,5 aufweist, wobei die Festfettgehalte durch NMR-Messungen (AOCS offizielles Verfahren Cd 16b-93) bestimmt werden, wobei die Emulsion 1,5-10 Gewichtsprozent Monogliyceride gesättigter Fettsäuren aufweist, welche unter Glycerolmonostearat, Glycerolmonopalmitat, Glycerolmonomyristat, Glycerolmonolaurat, Glycerolmonobehenat und Kombinationen derselben gewählt sind; und wobei Monogliyceride gesättigter Fettsäuren mindestens 80 Gewichtsprozent der in der Emulsion enthaltenen Monoglyceride ausmachen; und wobei die wässrige Phase der Backemulsion weniger als 2 Gewichtsprozent der wässrigen Phase an Monoglyceriden enthält.

2. Backemulsion nach Anspruch 1, bei welcher das Monogliycerid gesättigter Fettsäuren unter Glycerolmonostearat, Glycerolmonopalmitat und Kombinationen derselben gewählt ist.

3. Backemulsion nach einem der vorhergehenden Ansprüche, bei welcher die Emulsion mindestens 2 Gewichtsprozent, vorzugsweise 2,5-8 Gewichtsprozent an Monogliycerid gesättigter Fettsäuren enthält.

4. Backemulsion nach einem der vorhergehenden Ansprüche, bei welcher N₂₀ im Bereich von 15-35%, vorzugsweise 17-30% liegt.

5. Backemulsion nach einem der vorhergehenden Ansprüche, bei welcher N₂₀-N₃₀ im Bereich von 6-25%, vorzugsweise 9-20% liegt.

6. Backemulsion nach einem der vorhergehenden Ansprüche, bei welcher N₂₀-N₄₀ im Bereich von 10-35%, vorzugsweise 12-30% liegt.

7. Backemulsion nach einem der vorhergehenden Ansprüche, bei welcher Verhältnis (N₂₀-N₄₀)/N₂₀ mindestens 0,7, vorzugsweise mindestens 0,75 beträgt.

8. Backemulsion nach einem der vorhergehenden Ansprüche, bei welcher Triglyceride mindestens 80 Gewichtsprozent, vorzugsweise mindestens 90 Gewichtsprozent der kontinuierlichen Fettphase ausmachen.

9. Backemulsion nach einem der vorhergehenden Ansprüche, bei welcher die Emulsion 0,1-1 Gewichtsprozent Phosphoglceride enthält.

10. Verfahren zur Herstellung einer Backemulsion nach einem der vorhergehenden Ansprüche, wobei das Verfahren die folgenden Schritte aufweist:
• Kombinieren einer oder mehrerer Fettkomponenten und der Monogliyceride gesättigter Fettsäuren in der Zubereitung einer geschmolzenen Mischung von mindestens 65°C, und optionales Hinzufügen weiterer Fettphasenkomponenten zu der geschmolzenen Mischung zur Zubereitung einer Fettphasenzusammensetzung;
• Mischen einer Zusammensetzung der wässrigen Phase und der Zusammensetzung der Fettphase zur Zubereitung einer Voremulsion,
• wobei die Voremulsion eine Temperatur im Bereich von 40-85°C aufweist, und
• Kühlen der Voremulsion.

11. Verfahren zur Zubereitung eines Teigs oder Kuchenteigs, wobei das Verfahren den Schritt des gründlichen Mischens von Mehl mit einer Backemulsion nach einem der Ansprüche 1-9 aufweist.

12. Verfahren nach Anspruch 11, bei welchem das Mehl gründlich mit der Backemulsion, aktiver Hefe, Wasser und optional weiteren Backzutaten gemischt wird, um einen hefehaltigen Teig zuzubereiten, gefolgt von einem Aufgehenlassen des hefehaltigen Teigs.

13. Verfahren nach Anspruch 12, bei welchem das Mehl gründlich mit der Backemulsion, Zucker, Eiern und weiteren Backzutaten zur Zubereitung eines Kuchenteigs gemischt wird.

14. Verfahren zur Zubereitung einer luftdurchsetzten Füllung oder eines solchen Toppings, wobei das Verfahren das Mischen von Zucker mit einer Backemulsion nach einem der Ansprüche 1-9 und weiteren Backzutaten, gefolgt von einem Belüften der sich ergebenden Mischung aufweist.

## Revendications

1. Emulsion de boulangerie comprenant entre 60 et 88 % en poids d'une phase grasse continue et entre 12 et 40 % en poids d'une phase aqueuse dispersée, ladite phase grasse continue ayant une teneur en matières grasses solides à 20°C (N₂₀) comprise entre 12 et 40 %, une teneur en matières grasses solides à 25°C (N₂₅) comprise entre 8 et 30 %, une teneur en matières grasses solides à 35°C (N₃₅) inférieure à 15 %, une teneur en matières grasses solides à 40°C (N₄₀) de pas plus de 10 %, et un rapport (N₂₀-N₃₅)/N₂₀ d'au moins 0,5, lesdites teneurs en matières grasses solides étant déterminées par des mesures RMN (procédé officiel de l'AOCS Cd 16b-93) ; dans laquelle l'émulsion contient entre 1,5 et 10 % en poids de monoglycérides d'acides gras saturés choisis parmi le monostéarate de glycéryle, le monopalmitate de glycéryle, le monomyristate de glycéryle, le monolaurate de glycéryle, le monobéhénate de glycéryle et leurs combinaisons ; et dans laquelle les monoglycérides d'acides gras saturés représentent au moins 80 % en poids des monoglycérides contenus dans l'émulsion ; et dans lequel la phase aqueuse de l'émulsion de boulangerie contient moins de 2 % de monoglycérides en poids de ladite phase aqueuse.

2. Emulsion de boulangerie selon la revendication 1, dans laquelle le monoglycéride d'acides gras saturés est choisi parmi le monostéarate de glycéryle, le monopalmitate de glycéryle et leurs combinaisons.

3. Emulsion de boulangerie selon l'une quelconque des revendications précédentes, dans laquelle l'émulsion contient au moins 2 % en poids, de préférence entre 2,5 et 8 % en poids du monoglycéride d'acides gras saturés.

4. Emulsion de boulangerie selon l'une quelconque des revendications précédentes, dans laquelle N₂₀ est compris entre 15 et 35 %, de préférence entre 17 et 30 %.

5. Emulsion de boulangerie selon l'une quelconque des revendications précédentes, dans laquelle N₂₀-N₃₀ est compris entre 6 et 25 %, de préférence entre 9 et 20 %.

6. Emulsion de boulangerie selon l'une quelconque des revendications précédentes, dans laquelle N₂₀-N₄₀ est compris entre 10 et 35 %, de préférence entre 12 et 30 %.

7. Emulsion de boulangerie selon l'une quelconque des revendications précédentes, dans laquelle le rapport (N₂₀-N₄₀)/N₂₀ est d'au moins 0,7, de préférence d'au moins 0,75.

8. Emulsion de boulangerie selon l'une quelconque des revendications précédentes, dans laquelle les triglycérides représentent au moins 80 % en poids, de préférence au moins 90 % en poids de la phase grasse continue.

9. Emulsion de boulangerie selon l'une quelconque des revendications précédentes, dans laquelle l'émulsion contient entre 0,1 et 1 % en poids de phosphoglycérides.

10. Procédé de fabrication d'une émulsion de boulangerie selon l'une quelconque des revendications précédentes, ledit procédé comprenant les étapes suivantes :
• combiner un ou plusieurs composants de matière grasse et les monoglycérides d'acides gras saturés pour préparer un mélange fondu à une température d'au moins 65°C, et ajouter éventuellement d'autres composants de phase grasse audit mélange fondu pour préparer une composition de phase grasse ;
• mélanger une composition de phase aqueuse et la composition de phase grasse pour préparer une pré-émulsion,
• ladite pré-émulsion ayant une température comprise entre 40 et 85°C ; et
• refroidir la pré-émulsion.

11. Procédé de préparation d'une pâte de boulangerie, ledit procédé comprenant un mélange intime de la farine avec une émulsion de boulangerie selon l'une quelconque des revendications 1 à 9.

12. Procédé selon la revendication 11, dans lequel la farine est intimement mélangée avec l'émulsion de boulangerie, de la levure active, de l'eau et éventuellement d'autres ingrédients de boulangerie pour préparer une pâte contenant de la levure, après quoi l'on fait lever la pâte contenant de levure.

13. Procédé selon la revendication 12, dans lequel la farine est intimement mélangée avec l'émulsion de boulangerie, du sucre, des oeufs et d'autres ingrédients de boulangerie pour préparer une pâte à gâteau.

14. Procédé de préparation d'une garniture aérée ou un remplissage, ledit procédé comprenant un mélange du sucre à une émulsion de boulangerie selon l'une quelconque des revendications 1 à 9 et à d'autres ingrédients de boulangerie, puis une aération du mélange résultant.
